# EUROPEAN PATENT SPECIFICATION

(11) **EP 0 962 129 B1**
(45) Date of publication and mention of the grant of the patent: **12.03.2003**
(21) Application number: 98201859.0
(22) Date of filing: 05.06.1998
(51) Int. Cl.: A01G 31/00, C08J 9/33

(54) **Solid substrate composition**
Feste Trägerzusammensetzung
Composition solide de substrat

(43) Date of publication of application: 08.12.1999
(73) Proprietor: Houtepen, Piet W., 4841 LG Prinsenbeek (NL)
(72) Inventor: Houtepen, Piet W., 4841 LG Prinsenbeek (NL)
(74) Representative: Pieraerts, Jacques

(56) References cited:
- EP-A- 0 037 860
- WO-A-81/02968
- FR-A- 2 248 780

## Description

The present invention relates to a solid plant growing medium as described in the preamble of the first claim.

This solid plant growing medium may be used a.o. for the growing of young plants to fully fledged, full-grown plants and for production purposes, i.e. the growing of fruits on full-grown plants.

The solid plant growing medium of the preamble of the first claim is known from NL-A-9002467. The plant growing medium described in NL-A-9002467 comprises an elastic foam of a polyurethane ether which is foamed together with a polyurethane prepolymer to blocks with a bulk density between 65 and 110 kg/m³. The polymeric foam is a porous material. In order to improve the absorbent properties of the block, cellulose may be added.

The plant growing medium described in NL-A-9002467 however has the disadvantage that it has insufficient humidity control properties with respect to plants growing on the substrate. As a result, the humidity of the environment of the roots of the plants can show important variations, depending on the weather conditions and the regularity and the amount of water the plants are irrigated with. Also as a result, the frequency of irrigating the plants always needs to be adapted to the weather conditions or the ambient conditions.

From WO81/029 an inert growth medium is known which is based on a resilient, hydrophobic polyurethane foam, which contains 10-70 wt. % of granulated paper or disintegrated pulp as natural fibres in order to optimise water retention properties.

In WO 81/02968 it is explained that compressed, storage-stable plant substrates, based on hydrophilic, resilient polyurethane foam need to be capable of swelling, to absorb water. As the use of hydrophilic polyurethane involves considerable problems of root rotting, it has been suggested to use hydrophobic polyurethane instead. Hydrophobic polyurethane in turn presents the problem that it is difficult to moisten and that its capillarity is insufficient to allow obtaining sufficient water retaining ability.

To obtain a plant growth medium which contains sufficient air and has an appropriate hydrophilic/hydrophobic balance, it has been suggested by WO 81/02968 to combine hydrophobic polyurethane foam with 10-70 wt.% of natural fibres.

EP-A-0.037.860 disclose recovering glass fibres, rock wool and polyurethane foam waste products by grinding the materials and binding the ground particles in a plate, through spraying with an isocyanate or phenolic resin.

From FR-A-2248780 a plant culture medium is known which consists of grains or flocs of foliage or resin wood, having a different granulometry. To improve the effects, additives are incorporated into the culture medium. To improve aeration of the medium, polyurethane, polyether, polyester, polystyrene foams, may be incorporated. The chemical properties of the medium are ameliorated through addition of potassium containing products. The biologic properties are improved through addition of symbiotic micro-organism suspensions.

The medium may be compacted to a geometric shape with a certain rigidity, though capable of receiving the roots of the plants.

It is the aim of the present invention to provide a solid plant growing medium which is an alternative to the known composition, and which not only has good absorbent properties, but which is also capable of performing a humidity control function with respect to the plant.

This is achieved with the present invention with the technical features of the characterising part of the first claim.

The solid plant growing medium of this invention contains about 80 to 40 percent by weight with respect to the total weight of the composition of a polymeric foam, the polymeric foam being in a divided state. With divided state is meant that the polymeric foam is present in the form of particles, flakes, dices, granules, strips, fibres, pulverised material, etc.

The solid plant growing medium of this invention also contains about 20 to 60 percent by weight with respect to the total weight of the composition of a hydrophilic organic material, in particular coconut husk, which is also in the divided state.

It has now been found that because of the presence of the polymeric foam in the composition, the plant is not only capable of developing roots between and around the foam particles and the hydrophilic material, but also of developing an active root system in the pores of the polymeric foam, with an increased number of active, smaller hair roots. These hair roots are capable of absorbing nutriments rapidly.

If the coconut husk containing hydrophilic material is present in an amount of 20 to 60 percent by weight with respect to the total weight of the composition, it is not only capable of providing increased moisture absorbing properties, but also of providing humidity control properties to the composition. The hydrophilic polyurethane material thereby acts as a water reservoir for the polyurethane foam, as it has a larger water absorption capacity than the polymeric foam.

In a preferred embodiment, the plant growing medium contains in addition to the coconut husk an amount of a mineral wool or an organic material chosen from potting compost to cotton, wood or flax as hydrophilic material.

Water which is added to the composition, is absorbed by the organic material and/or the mineral wool and the polymeric foam. Thereupon, an equilibrium is established between the polymeric foam. Thereupon, an equilibrium is established between the amount of water absorbed by the polymeric foam and the amount of water absorbed by the organic material and/or the rock wool. Thereby, the organic material and the mineral wool are capable of absorbing a larger amount of water than the polymeric foam. A possible excess of water cannot be absorbed and flows away. Plant roots which have developed in the pore system of the polymeric foam, take up the water which is in the pore system. A non-equilibrium situation arises between the amount of water in the wet organic material and the dry polymeric foam. Due to the increased absorption and adsorption forces in the pores, the polymeric foam is capable of withdrawing an amount of water from the organic material, and of storing this water in its pore system. There, the water is contacted by the roots of the plants, and present to be taken up by the plants.

As a consequence, the combined presence of polymeric foam and *hydrophilic material* allows the maintenance of a substantially constant degree of humidity in the environment of the plant roots, even in case of widely varying weather conditions. In that way, an undesirable drying out of the roots, or the presence of an excessive amount of humidity in the environment of the roots can be avoided, and an optimal air/water balance for the roots can be provided.

The amount of water which may be withdrawn by the polymeric foam from the *hydrophilic material* is, among others, determined by the pore volume of the foam, and the ratio between the amount of water in the organic material and the amount of water in the polymeric foam. It has now been found that a substantially constant degree of humidity in the pores of the foam may be maintained, by mixing the polymeric foam with about 20 to 60 percent by weight of a *hydrophilic material.*

If more than 60 percent by weight of *hydrophilic* material is applied, there is a risk that the *solid plant growing medium* as well as the polymeric foam absorb too much water and that the roots will rot. If less than 20 percent by weight of *hydrophilic* material is applied, there is a risk that the absorption of water by the *solid plant growing medium* and the polymeric foam is insufficient, so that the roots receive too little water and the plants become blighted.

The ratio between the amount of polymeric foam on the one hand and the amount of *hydrophilic material* on the other hand, may be varied within the above mentioned limits, a.o. depending on the desired humidity of the *solid plant growing medium* and the purpose for which the *solid plant growing medium* is used.

According to the invention, *in addition to coconut husk as hydrophilic material,* various types of organic materials can be used, for example coconut husk, potting compost, wood, cotton fibres, flax, or another organic material. Coconut husk is particularly preferred. It has namely been found that coconut husk is a material with a high porosity that is capable of taking up large amounts of liquid. Due to its high absorption capacity, the coconut husk is capable of acting as a water reservoir for the polymeric foam. The coconut husk may be used in various forms, for example in the form of fibres or grit.

According to the invention, *in addition to coconut husk as hydrophilic material,* various types of mineral wool may be applied. A suitable example is rock wool.

According to the invention, *the polymeric foam may besides polyurethane foam comprise various types of polymeric foam, for example a foam of* polyurethane ether, polyethylene, polypropylene, polyamide, formaldehyde polymers and polyacryl or copolymers or mixtures thereof. Polyurethane foam is particularly preferred.

The *solid plant growing medium* of this invention may be used as such in flower boxes or flower beds, instead of potting compost, or may be used in the form of substrate blocks or mats. In that case, the *solid plant growing medium* is pressed into blocks or mats. If necessary, a binding agent may be added, in order to obtain an optimal mutual adhesion between the particles of the polymeric foam and with the coconut husk organic material.

The binding agent is preferably adjusted to the polymeric foam. An example of a suitable binding agent is a prepolymer of the material from which the polymeric foam is built up, or an adhesive, or any other binding agent known to the man skilled in the art. The amount of binding agent may be varied within wide ranges, and amounts for example to one part by weight for 5 to 15 parts by weight of polymeric foam.

The present invention also concerns a substrate block containing above described *solid plant growing medium.* The size and shape of the substrate block according to the invention may be varied within wide limits, depending on the intended use. The substrate block may for example be a small plug for the germination of plant seed and the development of small plants. Such a micro-plug may subsequently be inserted into a larger substrate block to allow a further development of the roots and the plant. Several substrate blocks of ever increasing size may be used during the development of a small plant into a full-grown plant.

The invention is further elucidated by means of the attached figure and description of the figure.

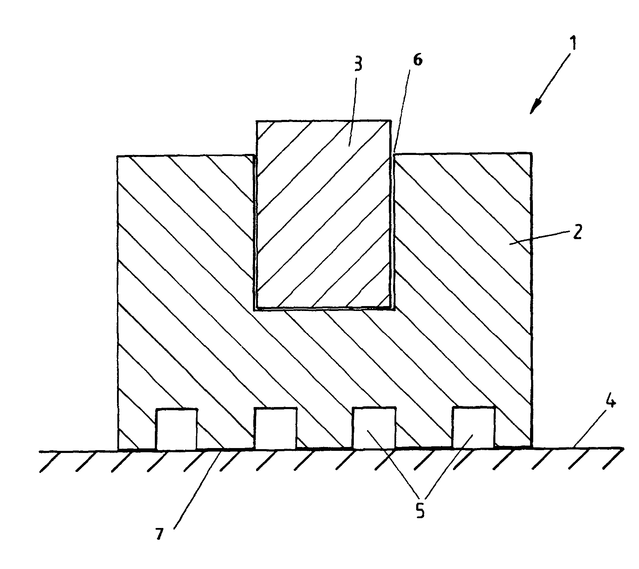

In Figure 1, a substrate block of this invention is shown.

The substrate block 1 shown in figure 1 comprises a first substrate block 2, with a recess 6, in which a smaller substrate block 3 can be inserted. The substrate block 3, in turn, can be inserted in a recess in a larger substrate block. The substrate block 1, 3 may be used for sowing plants, striking cuttings of plants, or growing small plants to larger plants.

The substrate block 1, 3 contains a physical mixture of a polymeric foam, preferably polyurethane foam *and coconut husk*, as described above. It is also possible to use a physical mixture of a polymeric foam on the one hand, and a mineral wool or a mixture of a mineral wool and an organic material on the other hand. The polymeric foam may be applied in the form of particles, granules, flakes, fibres, dices, etc. The coconut husk may be applied in various forms, for example in the form of grit or fibres. Preferably, coconut grit is used. Because the *solid plant growing medium* of this invention is a physical mixture, the roots of the plants may develop between the particles of the foam and the coconut husk. These will be mainly coarser roots. On the other hand, in the pore system of the polymeric foam, sufficient space is present to allow the development of smaller, active hair roots of the plant.

By adding organic material or/and mineral wool to the polymeric foam, the processability of the polymeric foam may be improved. Simultaneously, it is possible to obtain a cheaper *solid plant growing medium,* which is not only suitable for production purposes (the gaining of fruits), but also for the growing of small plants to large plants. Polymeric foam in itself is rather expensive, and is used as a breeding ground for full-grown plants for the production of fruits to be put on the market. For the growing of small plants to full-grown plants, mostly a breeding ground as cheap as possible is used, in order to keep the costs as low as possible.

The substrate block 2 may be put onto the bottom 4 with its bottom side 7. The bottom side 7 of the block is preferably hollow. Thereto, the block may for example comprise an air groove 5. The size of the air groove 5 may be varied within wide ranges, a.o. depending on the nature of the plant and the environment. Such a hollow bottom side 7 allows an excess of water, which has been added to the blocks, to flow off. On the other hand, in this way the possibility is provided for the roots of the plants of being contacted with air, which may positively influence the growth of the plant.

The *solid plant growing medium* of this invention offers the advantage that it can be reused several times. After the *solid plant growing medium* has been used a first time for the growing of plants or for production purposes, the composition can be cleaned and reused. Thereto, the composition is preferably steamed, whereby simultaneously a decontamination of the material is obtained. The composition can also be re-ground, in order to keep the oxygen level of the material up to standard. If desirable, an additional amount of mineral wool and/or organic material and/or polymer may be added prior to reusing the material.

The present invention thus also relates to a process for generating the above described plant growing medium as defined in claims 8 and 9.

## Claims

1. Solid plant growing medium comprising an amount of a polyurethane foam as a polymeric foam and an amount of a hydrophilic material, **characterised in that** the solid plant growing medium is a physical mixture containing 80 to 40 percent by weight with respect to the total weight of the composition of the polymeric foam in a divided state and 20 to 60 percent by weight with respect to the total weight of the composition of a hydrophilic material comprising coconut husk, also in a divided state.

2. Solid plant growing medium as claimed in claim 1, **characterised in that** the medium further comprises an amount of a mineral wool.

3. Solid plant growing medium as claimed in claim 1 or 2, **characterised in that** further an amount of a second organic material chosen from the group of potting compost, cotton, wood, flax.

4. Solid plant growing medium as claimed in any one of claims 1 - 3, **characterised in that** in addition to the polyurethane foam, the plant growing medium contains an amount of a foam of a polymer chosen from the group of polyethylene, polypropylene, polyamide and polyacryl, or mixtures thereof, as a polymeric foam.

5. Solid plant growing medium as claimed in any one of claims 1 - 4, **characterised in that** the polyurethane foam is present in the form of flakes, and the coconut husk is present in the form of fibres or grit.

6. Substrate block, comprising an amount of a solid plant growing medium according to any one of claims 1 to 3.

7. Substrate mat, comprising an amount of a solid plant growing medium according to any one of claims 1 to 5.

8. A regenerated plant growing medium, substrate block or substrate mat as claimed in any one of claims 1-7, **characterised in that** the medium, block or mat contains an additional amount of mineral wool, organic material, or polymer, or a mixture of these materials.

9. A process for regenerating the plant growing medium, substrate block or substrate mat as claimed in any one of claims 1-7, **characterised in that** the medium, block or mat is subjected to a steam treatment to achieve decontamination and the medium, block or mat is re-ground and an additional amount of mineral wool and/or organic material and/or polymer is added.

## Patentansprüche

1. Festes Pflanzenwachstumsmedium, umfassend eine Menge eines Polyrethanschaums als Polymerschaum und eine Menge eines hydrophilen Materials, **dadurch gekennzeichnet, dass** das feste Pflanzenwachstumsmedium eine physikalische Mischung ist, enthaltend 80 bis 40 Gewichtsprozent bezüglich des Gesamtgewichts der Zusammensetzung des Polymerschaums in einem geteilten Zustand und 20 bis 60 Gewichtsprozent bezüglich des Gesamtgewichts der Zusammensetzung eines hydrophilen Materials umfassend Kokosnussschale, ebenfalls in einem geteilten Zustand.

2. Festes Pflanzenwachstumsmedium nach Anspruch 1, **dadurch gekennzeichnet, dass** das Medium des Weiteren eine Menge einer Mineralwolle umfasst.

3. Festes Pflanzenwachstumsmedium nach Anspruch 1 oder 2, **dadurch gekennzeichnet, dass** das Medium des Weiteren eine Menge eines zweiten organischen Materials, ausgewählt aus der Gruppe von Topfkompost, Baumwolle, Holz oder Flachs, umfasst.

4. Festes Pflanzenwachstumsmedium nach einem der Ansprüche 1 - 3, **dadurch gekennzeichnet, dass** das Pflanzenwachstumsmedium außer dem Polyurethanschaum eine Menge eines Schaums eines Polymers, ausgewählt aus der Gruppe von Polyethylen, Polypropylen, Polyamid und Polyacryl, oder Mischungen davon, als einen Polymerschaum enthält.

5. Festes Pflanzenwachstumsmedium nach einem der Ansprüche 1 - 4, **dadurch gekennzeichnet, dass** der Polyurethanschaum in Form von Flocken vorliegt und die Kokosnussschale in Form von Fasern oder Körnern vorliegt.

6. Substratblock, umfassend eine Menge eines festen Pflanzenwachstumsmediums nach einem der Ansprüche 1 bis 3.

7. Substratmatte, umfassend eine Menge eines festen Pflanzenwachstumsmediums nach einem der Ansprüche 1 - 5.

8. Regeneriertes Pflanzenwachstumsmedium, regenerierter Substratblock oder regenerierte Substratmatte nach einem der Ansprüche 1 - 7, **dadurch gekennzeichnet, dass** das Medium, der Block oder die Matte eine zusätzliche Menge von Mineralwolle, organischem Material oder Polymer oder eine Mischung aus diesen Materialien enthält.

9. Verfahren zum Regenerieren des Pflanzenwachstumsmediums, des Substratblocks oder der Substratmatte nach einem der Ansprüche 1 - 7, **dadurch gekennzeichnet, dass** das Medium, der Block oder die Matte einer Dampfbehandlung unterzogen ist, um Dekontamination zu erreichen, und das Medium, der Block oder die Matte wieder zermahlen ist und eine zusätzliche Menge von Mineralwolle und/oder organischem Material und/oder Polymer zugefügt ist.

## Revendications

1. Milieu solide de croissance de plantes comprenant une fraction de mousse polymère comprenant de la mousse polyuréthane et une fraction d'un matériau hydrophile, **caractérisé en ce que** ledit substrat est un mélange physique comprenant 40 à 80 pourcents en poids de mousse polymère en particules et 20 à 60 pourcents en poids de matériau hydrophile en particules, lequel matériau hydrophile comprend des écales de noix de coco.

2. Milieu selon la revendication 1, **caractérisé en ce qu'**il comprend en outre une fraction de laine minérale.

3. Milieu selon l'une quelconque des revendications 1-2, **caractérisé en ce que** il comprend en outre une fraction d'un matériau organique choisi parmi le compost d'empotage, le coton, le bois et le lin.

4. Milieu selon l'une quelconque des revendications 1-3, **caractérisé en ce que** la fraction de mousse polymère comprend en sus de la mousse polyuréthane une mousse choisie parmi le polyéthylène, le polypropylène, le polyamide et le polyacrylique ou un mélange de ces derniers.

5. Milieu selon l'une quelconque des revendications 1-4, **caractérisé en ce que** la mousse polyuréthane se présente sous forme de pétales et les écales de noix de coco se présentent sous forme de fibres ou de grains.

6. Bloc de substrat comprenant une fraction d'un milieu selon l'une quelconque des revendications 1-3.

7. Matelas de substrat comprenant une fraction d'un milieu selon l'une quelconque des revendications 1-5.

8. Milieu de croissance de plantes régénéré, bloc de substrat ou matelas de substrat selon l'une quelconque des revendications 1-7, **caractérisé en ce que** le milieu, le bloc ou le matelas comprend une fraction additionnelle de laine minérale, de matériau organique, de polymère ou d'un mélange de ces derniers.

9. Procédé de régénération d'un milieu de croissance de plantes, d'un bloc de substrat ou d'un matelas de substrat selon l'une quelconques des revendications 1-7, caractérisé en ce sue le milieu, le bloc ou le matelas est soumis à un traitement à la vapeur pour effectuer une décontamination, en ce que le milieu, bloc ou matelas est reconstitué et en ce qu'on y ajoute une fraction additionnelle de laine minérale et/ou de matériau organique et/ou polymère.
